# EUROPÄISCHE PATENTSCHRIFT

(11) **EP 1 992 921 B1**
(45) Veröffentlichungstag und Bekanntmachung des Hinweises auf die Patenterteilung: **10.08.2011**
(21) Anmeldenummer: 07400015.9
(22) Anmeldetag: 16.05.2007
(51) Int. Cl.: G01F 23/24

(54) **Verfahren und Vorrichtung zur Füllstandbestimmung**
Method and device for determining the filling level
Procédé et dispositif destiné à la détection de l'état de remplissage

(43) Veröffentlichungstag der Anmeldung: 19.11.2008
(73) Patentinhaber: FAFNIR GmbH, D-22765 Hamburg (DE)
(72) Erfinder: Schrittenlacher, Wolfgang, 21075 Hamburg (DE); Maurer, Christian, 22547 Hamburg (DE); Kunter, Stefan, 22337 Hamburg (DE)
(74) Vertreter: UEXKÜLL & STOLBERG

(56) Entgegenhaltungen:
- DE-A1- 2 723 999
- DE-A1- 3 231 142
- FR-A1- 2 698 324
- US-A- 5 156 047
- US-A- 5 626 053

## Beschreibung

Die Erfindung betrifft ein Verfahren sowie eine Vorrichtung zum Bestimmen des Füllstands einer elektrisch leitenden Flüssigkeit in einem Behälter.

Ein derartiges Verfahren, auch als potentiometrische Messmethode bezeichnet, ist aus der DE 27 23 999 A1 bekannt. Dabei taucht eine Elektrode, die einen elektrischen Widerstand bildet und in der Regel rohrartig als Sondenrohr ausgebildet ist, in die Flüssigkeit ein. Die Eintauchlänge variiert mit dem Füllstand, wobei sich eines der Enden (erstes Ende oder Sondenfuß) auch bei niedrigem Füllstand in der Flüssigkeit befindet. Wenn man einen Strom durch diese Elektrode leitet, entsteht ein Spannungsabfall in dem Sondenrohr, und zu einer mit der Flüssigkeit elektrisch leitend in Verbindung stehenden Gegenelektrode fließen Streuströme durch die Flüssigkeit. In der Praxis benutzt man einen Wechselstrom, um galvanische Effekte zu vermeiden. Unabhängig von der Größe der Leitfähigkeit der Flüssigkeit stellt sich am Sondenfußpunkt in Bezug auf die Gegenelektrode eine Spannung ein, die dem halben Spannungsabfall entlang des eingetauchten Sondenrohrbereichs entspricht. Diese Spannung hängt demnach linear von dem Füllstand ab und lässt sich durch eine Messung bestimmen, so dass dem Spannungswert ein Füllstandwert zugeordnet werden kann.

Die potentiometrische Messmethode hat sich bewährt und ist seit vielen Jahren im Einsatz. Sie ist auch in der VDI-Richtlinie 3519 dargestellt. Das Verfahren ist sehr robust und relativ unabhängig von Anhaftungen an dem Sondenrohr, z.B. bei pastösen Füllgütern. Es eignet sich für elektrische Leitfähigkeiten im Bereich von etwa 1 µS/cm bis 1 S/cm; Leitungswasser hat typischerweise eine Leitfähigkeit von ca 500 µS/cm.

Da die potentiometrische Messmethode nur auf leitfähige Flüssigkeiten anspricht, ist sie auch sehr gut geeignet, leitfähige von nicht-leitfähigen Flüssigkeitsschichten zu unterscheiden. Dafür sind Einstellungen erforderlich, die dem Messgerät mitteilen, wie die Einbauorientierung ist und ob die leitfähige Flüssigkeitsschicht oben oder unten angeordnet ist.

Um eine genaue Bestimmung des Füllstands zu ermöglichen, muss der elektrische Widerstand des Sondenrohrs klein sein gegen die elektrischen Widerstände in der Flüssigkeit. Andererseits ist aber auch ein merklicher Spannungsabfall entlang des Sondenrohrs erforderlich. Dies bedeutet, dass ein relativ großer Strom durch das Sondenrohr geleitet werden muss. Die im Stand der Technik verwendeten Schaltungen für die Stromquelle sind sehr voluminös und haben einen hohen Stromverbrauch. Dies ist nicht nur wegen der damit verbundenen Kosten nachteilig, sondern auch, weil häufig an der Messstelle kein Platz für derartige Schaltungen zur Verfügung steht oder eine dickere Kabelverbindung dorthin nur mit Schwierigkeiten zu erstellen ist.

Es ist Aufgabe der Erfindung, die Möglichkeiten für die potentiometrische Messmethode zu erweitern und insbesondere den dafür erforderlichen Stromverbrauch zu verringern.

Diese Aufgabe wird gelöst durch ein Verfahren zum Bestimmen des Füllstands einer elektrisch leitenden Flüssigkeit in einem Behälter mit den Merkmalen des Anspruchs 1. Der Anspruch 10 betrifft eine entsprechende Vorrichtung. Vorteilhafte Ausgestaltungen der Erfindung ergeben sich aus den Unteransprüchen.

Bei dem erfindungsgemäßen Verfahren taucht eine Elektrode, die einen elektrischen Widerstand bildet und ein erstes Ende und ein zweites Ende aufweist, in die Flüssigkeit ein. Die Elektrode ist in der Regel länglich ausgeführt, z.B. als Sondenrohr, und kann von oben in den Behälter eingeführt sein (was der Regelfall ist), aber auch von unten. Die Eintauchlänge dieser Elektrode in der Flüssigkeit variiert mit dem Füllstand. Das erste Ende der Elektrode taucht (per definitionem) auch bei niedrigem Füllstand in die Flüssigkeit ein. Dies schließt aber nicht aus, dass je nach Konstruktion das erste Ende bei sehr niedrigem Füllstand auch frei liegen kann.

Die Elektrode hat eine elektrisch leitfähige Oberfläche, aber auch einen merklichen elektrischen Widerstand (z.B. im Bereich von 10 mΩ bis 100 mΩ) über die Länge der Elektrode, was sich durch geeignete Dimensionierung und Materialwahl (z.B. Edelstahl) erreichen lässt. Die Begriffe erstes und zweite Ende sind funktionell zu verstehen und schließen nicht aus, dass sich die die Elektrode enthaltende Baugruppe über das erste oder zweite Ende hinaus erstrecken kann.

Anders als im Stand der Technik ist der zeitlich veränderliche Strom kein üblicher Wechselstrom, sondern der Strom wird pulsartig angelegt. Dies ermöglicht es, bei sehr niedrigem mittlerem Stromverbrauch die für eine Messung erforderlichen hohen Ströme kurzzeitig bereitzustellen. Zur Anpassung an die niederohmige Elektrode kann ein Übertrager verwendet werden. Wegen des pulsartigen Stromes ist auch die Spannung (erste Spannung) zeitabhängig, die für die Potentialdifferenz zwischen dem ersten Ende der Elektrode und einer mit der Flüssigkeit elektrisch leitend in Verbindung stehenden Gegenelektrode charakteristisch ist und die den Wert für den Füllstand repräsentiert. Zum Zuordnen des Füllstandwerts wird daher der zeitliche Verlauf der ersten Spannung ausgewertet.

Bei einer vorteilhaften Ausführungsform der Erfindung wird der zeitliche Verlauf der ersten Spannung aufgezeichnet und in den Pausen zwischen aufeinanderfolgenden Strompulsen ausgewertet. Dafür können die Zeitverläufe mittels eines von einem Mikrokontroller gesteuerten Analog/Digital-Wandlers aufgezeichnet und z.B. mit Hilfe eines Mikroprozessors oder anderer Hardwarekomponenten aufbereitet und umgerechnet werden. Dabei ist das Ziel, die erste Spannung oder einen dafür charakteristischen Wert zu erfassen und in den gesuchten Füllstandwert umzuwandeln. Wie das im Einzelnen erfolgen kann, ist einem Fachmann geläufig.

Da der mittlere Stromverbrauch bei dem erfindungsgemäßen Verfahren niedrig ist, lässt sich auch eine übliche 4-20mA-Schnittstelle für die Quelle des zeitlich veränderlichen Stroms verwenden. Derartige Schnittstellen sind in der Analogtechnik weit verbreitet und dienen zum Kodieren von Messsignalen durch Ströme, so dass z.B. Messfehler durch Spannungsabfälle in Zuleitungen vermieden werden. Hiermit wird z.B. ein Messsignal von 0% durch einen Strom von 4 mA und ein Messsignal von 100% durch einen Strom von 20 mA codiert. Bei dem erfindungsgemäßen Verfahren wird die Benutzung einer 4-20mA-Schnittstelle dadurch ermöglicht, dass der Strom bei dem pulsartigen Betrieb durch ein entsprechendes Tastverhältnis in ausreichendem Maße reduziert werden kann. Die Vorteile bei der praktischen Umsetzung sind erheblich. Insbesondere sind nur zwei Adern zu der Steuer- und Auswerteelektronik zu legen, durch die keine großen Ströme fließen müssen. Diese Elektronik kann in der Nähe der Elektrode angeordnet sein, z.B. auch als feste Baueinheit mit der Elektrode.

Bei einer bevorzugten Ausführung des erfindungsgemäßen Verfahrens wird eine zweite Spannung bestimmt, die für die Potentialdifferenz zwischen dem zweiten Ende der Elektrode und der Gegenelektrode charakteristisch ist. Die zweite Spannung kann in ähnlicher Weise aufgezeichnet und in den Pausen zwischen aufeinanderfolgenden Strompulsen ausgewertet werden wie die erste Spannung. Aus dem Vergleich der ersten Spannung mit der zweiten Spannung lässt sich die Einbaulage der Elektrode bestimmen, insbesondere, ob die Elektrode von oben oder von unten in die Flüssigkeit eingeführt ist. Dies ist ein großer Vorteil, da in der Praxis die Einbaulage manchmal nicht ohne weiteres erkennbar ist.

Das erfindungsgemäße Verfahren kann auch dann benutzt werden, wenn zusätzlich zu der elektrisch leitenden Flüssigkeit eine Schicht mit einer elektrisch nicht leitenden Flüssigkeit in dem Behälter vorhanden ist. Dazu muss die Einbaulage der Elektrode bekannt sein, und die elektrische Leitfähigkeit der nicht leitenden Flüssigkeit sollte höchstens 1% der elektrischen Leitfähigkeit der elektrisch leitenden Flüssigkeit betragen, um deren Schichtdicke mit ausreichender Genauigkeit zu bestimmen. Aus einem Vergleich der ersten Spannung mit der zweiten Spannung lässt sich bestimmen, ob sich die elektrisch leitende Flüssigkeit oberhalb oder unterhalb der elektrisch nicht leitenden Flüssigkeit befindet. Dies wird weiter unten durch Ausführungsbeispiele verdeutlicht.

In vielen Fällen ist es für den Anwender einer Füllstandmessung in Prozessbehältern von großem Interesse, zusätzliche Parameter über den Prozess zur Verfügung zu haben, z.B. um einen Reaktionsförtschritt zu quantifizieren. Neben der Temperatur ist die elektrische Leitfähigkeit des Füllguts ein solcher Parameter.

Mit einer Vorrichtung zur Durchführung des erfindungsgemäßen Verfahrens lässt sich ohne großen zusätzlichen Aufwand auch die elektrische Leitfähigkeit der Flüssigkeit bestimmen. Denn die Elektrode ist in Bezug auf die Gegenelektrode elektrisch isoliert aufgebaut, was eine Widerstandsmessung zwischen der Elektrode und der Gegenelektrode ermöglicht. Dafür werden für den elektrischen Widerstand zwischen der Elektrode und der Gegenelektrode charakteristische Größen gemessen (z.B. eine Spannung und ein Strom). Um daraus die elektrische Leitfähigkeit der Flüssigkeit zu bestimmen, ist eine Kenntnis über die Geometrie der Feldverteilung zwischen der Elektrode und der Gegenelektrode erforderlich. Diese Geometrie hängt außer von festen Parametern auch von dem (variablen) Füllstand der elektrisch leitenden Flüssigkeit ab, so dass je nach den Messbedingungen auch eine Information über den Füllstand benötigt wird, um die elektrische Leitfähigkeit zu bestimmen. Der schalttechnische Aufwand für die zusätzliche Möglichkeit, neben dem Füllstand auch die elektrische Leitfähigkeit der Flüssigkeit zu bestimmen, ist gering, wie weiter unten an einem Ausführungsbeispiel verdeutlicht wird.

Wenn der Behälter eine metallische Wandung hat, die mit der Flüssigkeit in elektrisch leitendem Kontakt steht, lässt sich die Behälterwandung als Gegenelektrode verwenden. Bei anderen Ausgestaltungen ist die Gegenelektrode als separates Bauteil ausgeführt, z.B. als Rohr oder Stab, der vorzugsweise parallel zu der Elektrode angeordnet ist. Wenn die Gegenelektrode rohrförmig und konzentrisch zu der Elektrode angeordnet ist, ergeben sich besonders einfache geometrische Verhältnisse, die die Auswertung für eine Bestimmung der elektrischen Leitfähigkeit der Flüssigkeit erleichtern. Dabei muss gewährleistet sein, dass die Flüssigkeit den Zwischenraum zwischen der Elektrode und der Gegenelektrode erreichen und dem Füllstand entsprechend ausfüllen kann. Bei weiteren Ausführungsmöglichkeiten ist die Elektrode als flaches Blech oder als Drahtseil mit einem Gewicht im unteren Bereich ausgestaltet. Wenn die Behälterwandung aus Kunststoff besteht, kann auch ein nach unten geführtes Blech an der Innenseite der Behälterwandung als Elektrode verwendet werden.

Um der Elektronik, die sich z.B. auch zum Bestimmen der elektrischen Leitfähigkeit der Flüssigkeit verwenden lässt, z.B. Informationen über die Geometrie der Gegenelektrode mitzuteilen, können sowohl analytisch bestimmte als auch empirisch ermittelte Parameter eingelesen werden. Dies kann z.B. über ein Hart-Protokoll erfolgen, das ein dem Stromsignal einer 4-20mA-Schnittstelle aufmoduliertes digitales Signal darstellt. Dieses Protokoll ermöglicht es auch, zusätzliche Daten auszulesen.

Für einige Anwendungen kann es vorteilhaft sein, wenn sich die Länge der Elektrode und der damit verbundenen Teile vor Ort auf einen gewünschten Wert einrichten lässt, insbesondere um eine Anpassung an einen gegebenen Behälter zu erreichen. Wenn z.B. ein mit Kontakten versehenes Endstück der Elektrode abnehmbar gestaltet ist, kann die Elektrode nach Abnehmen dieses Endstücks auf die gewünschte Länge zugesägt werden, wonach das Endstück wieder in abgedichteter Weise aufgesetzt wird.

Das erfindungsgemäße Verfahren und die erfindungsgemäße Vorrichtung können nicht nur bei stehenden Flüssigkeiten in geschlossenen oder offenen Behältern angewandt werden, sondern z.B. auch bei anderen Behälterformen wie z.B. Leitungen oder Kanälen, auch mit fließenden oder strömenden Flüssigkeiten.

Im Folgenden wird die Erfindung anhand von Ausführungsbeispielen weiter erläutert. Die Zeichnungen zeigen in
- Figur 1: eine schematische Ansicht einer erfindungsgemäßen Vorrichtung zur Bestimmung des Füllstands einer elektrisch leitenden Flüssigkeit in einem Behälter,
- Figur 2: in Teil (a) ein schematisches Schaltbild, das den Potentialverlauf längs der in die Flüssigkeit eintauchenden Elektrode (Sondenrohr) der Vorrichtung veranschaulicht, und in Teil (b) dasselbe Schaltbild anders gezeichnet,
- Figur 3: einen schematischen Schaltplan der erfindungsgemäßen Vorrichtung in der Funktion zur Messung des Füllstands der elektrisch leitenden Flüssigkeit,
- Figur 4: den Schaltplan aus Figur 3 in der Funktion zur Bestimmung der elektrischen Leitfähigkeit der Flüssigkeit,
- Figur 5: eine schematische Ansicht einer praktischen Ausführungsform der erfindungsgemäßen Vorrichtung bei der Messung des Füllstands einer elektrisch leitenden Flüssigkeit,
- Figur 6: die Ausführungsform aus Figur 5 bei der Messung des Füllstands einer elektrisch leitenden Flüssigkeit, die von einer elektrisch nicht leitenden Flüssigkeit überlagert ist,
- Figur 7: eine schematische Ansicht einer weiteren Ausführungsform der erfindungsgemäßen Vorrichtung, die von unten in einen Behälter eingebaut ist, und
- Figur 8: eine schematische Ansicht einer Ausführungsform der erfindungsgemäßen Vorrichtung, die in einen Tank mit einem Überlauf eingebaut ist, wobei eine elektrisch nicht leitende Flüssigkeit von einer elektrisch leitenden Flüssigkeit überlagert ist.

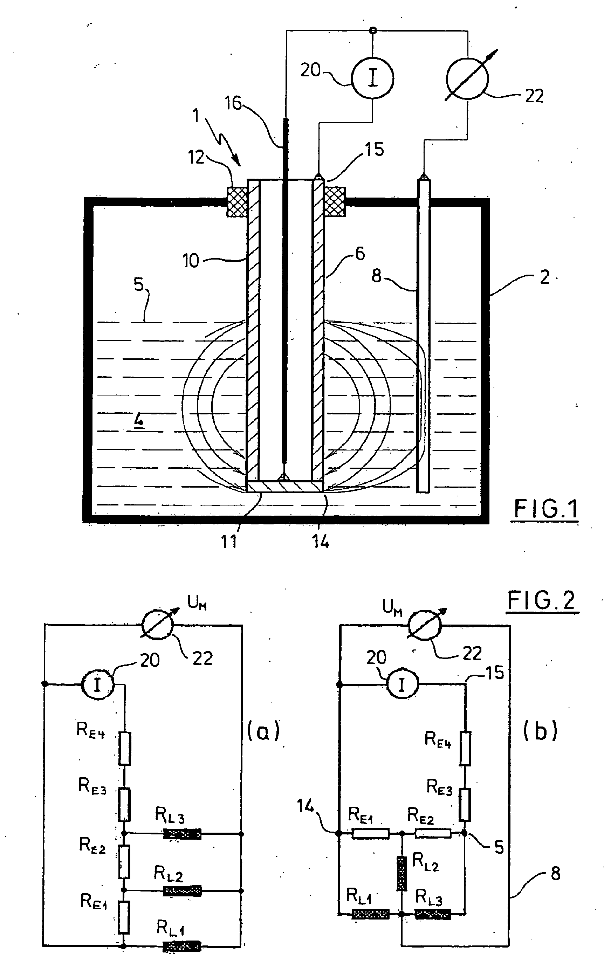

Die Figur 1 veranschaulicht in schematischer Weise eine Vorrichtung 1 zum Bestimmen des Füllstands einer elektrisch leitenden Flüssigkeit in einem Behälter 2 sowie das damit durchgeführte Verfahren.

In dem Behälter 2 befindet sich eine elektrisch leitende Flüssigkeit 4, deren momentaner Füllstand (Pegel) bei 5 liegt.

Von oben ist in den Behälter 2 eine Elektrode 6 eingeführt, auch als "Sondenrohr" bezeichnet. Die Elektrode 6 reicht fast bis zum Boden des Behälters 2. In einigem Abstand zu der Elektrode 6 ist in dem Behälter 2 eine Gegenelektrode 8 angeordnet. In der gezeigten Ausführung ist die Gegenelektrode 8 stabförmig; sie verläuft parallel zu der Elektrode 6.

Während die Gegenelektrode 8 eine hohe elektrische Leitfähigkeit besitzt, so dass sie eine Äquipotentialfläche definiert, die z.B. auf Erdpotential liegt, bildet die Elektrode 6 einen elektrischen Widerstand. Dessen Widerstandswert ist erheblich kleiner als der elektrische Widerstand der leitenden Flüssigkeit zwischen der Elektrode 6 und der Gegenelektrode 8, aber andererseits so groß, dass sich längs der Elektrode 6 ein Spannungsabfall einstellen kann. Ein typischer Wert für den Widerstand längs der Elektrode 6 liegt im Bereich von 10 mΩ bis 100 mΩ, aber andere Zahlenwerte sind ebenfalls möglich.

In der in Figur 1 gezeigten Ausführungsform ist die Elektrode 6 als längliches Rohr mit einem Mantel 10 und einem Boden 11 ausgebildet. Das obere Ende der Elektrode 6 ist über eine isolierte Durchführung 12 mit dem Behälter 2 verbunden. Das untere Ende (erste Ende) der Elektrode 6 ist mit 14, das obere Ende (zweites Ende) mit 15 bezeichnet. Zu dem ersten Ende 14, also hier dem Boden 11, führt eine Zuleitung 16 mit niedrigem elektrischen Widerstand.

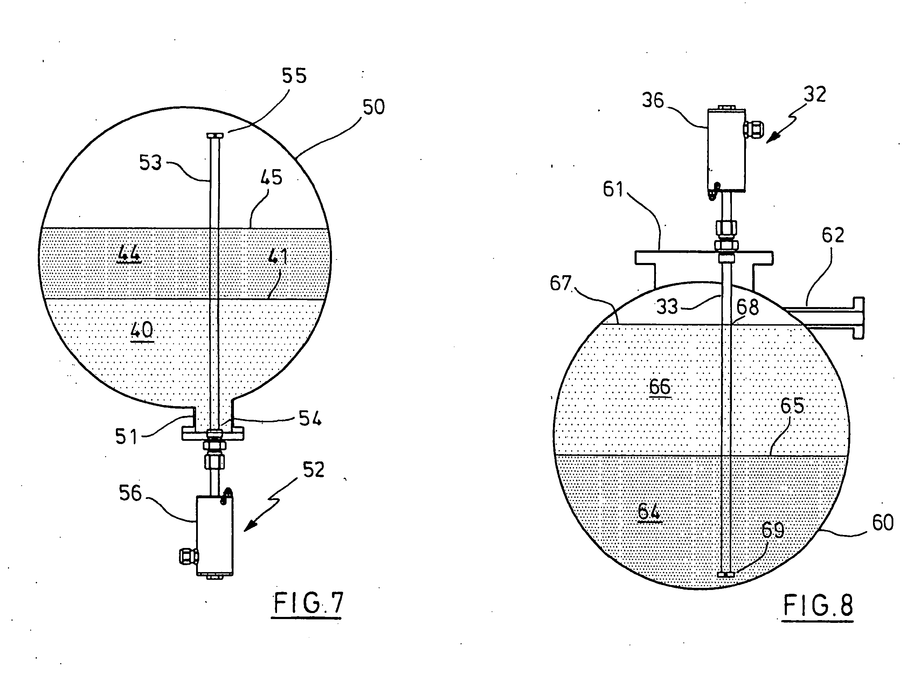

Aus Figur 1 ist ersichtlich, dass das erste Ende 14 auch bei niedrigem Füllstand 5 in die Flüssigkeit 4 eintaucht. Erst bei sehr niedrigem Füllstand, bei dem keine Messung mehr möglich ist, liegt das erste Ende 14 frei. Das erste Ende der Elektrode 6 ist per definitionem das Ende, das (fast) immer von der Flüssigkeit 4 umgeben ist. Gemäß Figur 1 befindet sich das erste Ende 14 am freien Ende der Elektrode 6 und an der tiefsten Stelle; andere Anordnungen sind aber ebenfalls möglich, siehe Figur 7 und Figur 8.

Um den Füllstand 5 zu bestimmen, wird zwischen dem ersten Ende 14 und dem zweiten Ende 15 der Elektrode 6 mittels einer Stromquelle 20 ein Strom angelegt. Zur Vermeidung galvanischer Reaktionen ist der Strom zeitlich veränderlich. Die Potentialdifferenz zwischen dem ersten Ende 14 der Elektrode 6 und der Gegenelektrode 8 wird mit Hilfe eines (ersten) Spannungsmessers 22 bestimmt.

Die Figur 2 veranschaulicht die Wirkungsweise einer Füllstandmessung. Teil (a) zeigt ein Prinzipschaltbild der Anordnung aus Figur 1. Der Widerstand der Elektrode 6 ist als Serie von vier Widerständen R_{E1} bis R_{E4} dargestellt, wobei sich R_{E1} und R_{E2} in der Flüssigkeit 4 befinden und R_{E1} = R_{E2}. Da die Flüssigkeit elektrisch leitend ist, fließen Streuströme durch die Flüssigkeit 4, z.B. von der Elektrode 6 zur Gegenelektrode 8. Diese Streuströme sind in Figur 1 durch Linien veranschaulicht, die auch den Verlauf des elektrischen Feldes darstellen. In Figur 2 (a) ist der elektrische Widerstand der Flüssigkeit 4 durch drei Ohmsche Widerstände R_{L1} bis R_{L3} repräsentiert. Bei einem symmetrischen Stromverlauf ist R_{L1} = R_{L3}.

In Figur 2 (b) ist das Schaltbild aus Figur 2(a) in etwas anderer Darstellung nochmals gezeichnet. Daran erkennt man, dass die von dem Spannungsmesser 22 gemessene erste Spannung gleich dem halben Spannungsabfall längs der Elektrode 6 in dem in die Flüssigkeit 4 eintauchenden Bereich ist, denn durch den Widerstand R_{L2} fließt aus Symmetriegründen kein Strom. Die mittels des Spannungsmessers 22 bestimmte Spannung variiert linear mit dem Füllstand. Dieser Spannung kann daher ein Füllstandwert zugeordnet werden.

Die dafür erforderlichen Parameter lassen sich am einfachsten durch Kalibrierungsmessungen ermitteln. In der DE 27 23 999 A1 sind bei der Erläuterung der Funktionsweise der Füllstandmessung auch die Widerstände der Zuleitungen berücksichtigt. Der Einfluss der Widerstände der Zuleitungen kann ferner dadurch vermieden werden, dass zusätzliche Messleitungen an die Punkte 14 und 15 geführt werden. Damit lässt sich der Spannungsverlauf an den Elektrodenenden direkt bestimmen, und die Messwerte können damit korrigiert werden (Vierleitertechnik).

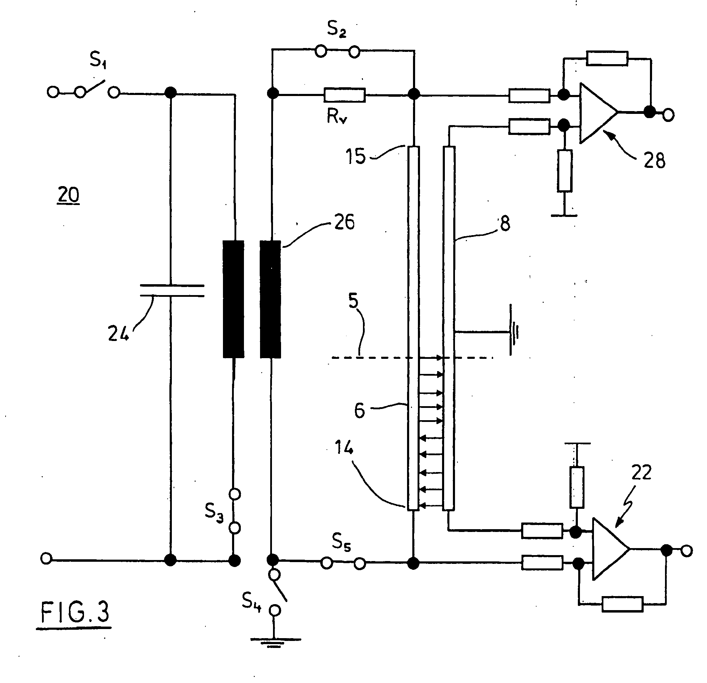

Bei herkömmlichen Vorrichtungen zum Bestimmen des Füllstands erzeugt die Stromquelle 20 einen Wechselstrom. Erfindungsgemäß wird jedoch mittels der Stromquelle 20 kein üblicher Wechselstrom angelegt, sondern es erfolgt ein pulsartiger Betrieb. Dies wird anhand des Schaltbilds in Figur 3 erläutert.

Zunächst sind in Figur 3 die Elektrode 6 mit dem ersten Ende 14 und dem zweiten Ende 15 sowie die Gegenelektrode 8 (die auf Erdpotential liegt) zu erkennen. Bis zu dem Füllstand 5 fließen Streuströme in der Flüssigkeit, wie durch die Pfeile unterhalb des Füllstands 5 angedeutet.

In der in Figur 3 gezeigten Betriebsart ist der Schalter S₄ permanent geöffnet, während die Schalter S₂ (zum Kurzschließen des Widerstandes Rᵥ) und S₅ permanent geschlossen sind. Bei geöffnetem Schalter S₃ und geschlossenem Schalter S₁ wird ein Kondensator 24 aufgeladen und dann der Schalter S₁ geöffnet. Wenn nun der Schalter S₃ schließt, erfolgt ein Strompuls, der mittels eines Übertragers 26 durch die Elektrode 6 geleitet wird und dabei für den oben erläuterten Spannungsabfall sorgt. Die für die Potentialdifferenz zwischen dem ersten Ende 14 der Elektrode 6 und der Gegenelektrode 8 charakteristische (erste) Spannung wird mit dem (ersten) Spannungsmesser 22 bestimmt, der in Figur 3 als Operationsverstärker mit zugeordneten Widerständen ausgeführt ist.

Eine zu der ersten Spannung komplementäre zweite Spannung zwischen dem zweiten Ende 15 der Elektrode 6 und der Gegenelektrode 8 wird mit einem zweiten Spannungsmesser 28 bestimmt, der ebenfalls als Operationsverstärker mit zugehörigen Widerständen ausgestaltet ist.

Abgesehen von der Elektrode 6 und der Gegenelektrode 8 befinden sich die in Figur 3 dargestellten Bauteile bei vorteilhaften Ausführungsformen in einer gemeinsamen Baugruppe mit einem gemeinsamen Gehäuse, das im Folgenden als Betriebselektronik bezeichnet wird.

Bei vorteilhaften Ausführungsformen wird der Kondensator 24 über eine 4-20mA-Schnittstelle aufgeladen. Obwohl dabei nur ein relativ geringer Ladestrom möglich ist, kann wegen des pulsartigen Betriebs der Stromquelle mittels des Übertragers 26 ein großer Strom durch die Elektrode 6 geleitet werden. Dieser Strom und somit die erste und die zweite Spannung sind ebenfalls pulsartig. Die an Ausgängen der Operationsverstärker des ersten Spannungsmessers 22 und des zweiten Spannungsmessers 28 bereitgestellten Spannungswerte werden in ihrem zeitlichen Verlauf aufgezeichnet und können in den Pausen zwischen aufeinanderfolgenden Strompulsen ausgewertet werden. Diese Schritte finden vorzugsweise ebenfalls in der Betriebselektronik statt.

Als Ausgangssignal gibt die Betriebselektronik den gemessenen Füllstand ab, z.B. als Rohdaten in analoger oder digitaler Form oder bereits umgerechnet in eine Höhenangabe, gegebenenfalls unter Verwendung von Kalibrierungsdaten.

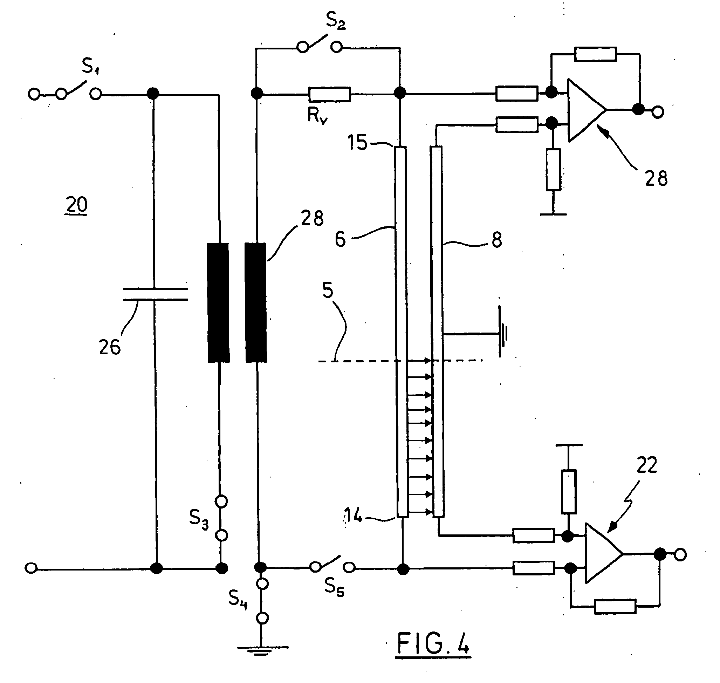

Die Vorrichtung 1 kann auch zur Bestimmung der elektrischen Leitfähigkeit der Flüssigkeit 4 verwendet werden. Ein Beispiel für eine Schaltung, die dies ermöglicht, ist in Figur 4 dargestellt. Die Schaltung gemäß Figur 4 hat große Ähnlichkeit mit der gemäß Figur 3 und ist im Ausführungsbeispiel durch Umstellen der Schalter S₂, S₄ und S₅ realisiert. Ein durch Betätigen der Schalter S₁ und S₃ erzeugter Strompuls bewirkt an der Sekundärseite des Übertragers 26 einen Spannungspuls, der wegen des geschlossenen Schalters S₄ auf Erdpotential bezogen ist. Der Spannungspuls fällt an vier in Reihe geschalteten Widerständen ab, nämlich dem Widerstand Rᵥ, dem Widerstand der Elektrode 6, dem Widerstand der elektrisch leitenden Flüssigkeit zwischen der Elektrode 6 und der Gegenelektrode 8 und dem Widerstand der Gegenelektrode 8. Letzterer ist vernachlässigbar klein, und im Vergleich zum Widerstand der Flüssigkeit kann auch der Widerstand der Elektrode 6 vernachlässigt werden. Der Spannungsabfall über die Flüssigkeit wird mit Hilfe des ersten Spannungsmesser 22 und/oder des zweiten Spannungsmessers 28 bestimmt. Ferner wird noch die Gesamtspannung an der Sekundärseite des Übertragers 28 oder alternativ der Spannungsabfall über den Widerstand Rᵥ als Maß für den durch die Flüssigkeit fließenden Strom bestimmt (was in Figur 4 nicht eingezeichnet ist).

Im Ausführungsbeispiel werden die Schalterstellungen über die Betriebselektronik gesteuert, und auch die Aufzeichnung der zeitabhängigen Spannungswerte und deren Auswertung in den Pausen zwischen den Pulsen erfolgt in der Betriebselektronik.

Um aus den gemessenen Werten für die an der Flüssigkeit anliegende Spannung und den durch die Flüssigkeit fließenden Strom die elektrische Leitfähigkeit der Flüssigkeit zu bestimmen, ist auch eine Information über die Feldverteilung zwischen der Elektrode 6 und der Gegenelektrode 8 erforderlich. Bei der in Figur 1 gezeigten Geometrie ist die Feldverteilung komplizierter als bei einer konzentrischen Anordnung, in der die Gegenelektrode eine zylindrische Elektrode zylinderartig umgibt. In die Bestimmung der elektrischen Leitfähigkeit geht auch der Füllstand ein, da die Querschnittsfläche, durch die der Strom durch die Flüssigkeit fließt, mit dem Füllstand wächst. Der Füllstand kann in einer unabhängigen Messung ermittelt werden.

Falls der Behälter 2 eine elektrisch leitende Wandung besitzt, die mit der Flüssigkeit 4 in Kontakt steht, kann auch der Behälter 2 als Gegenelektrode benutzt werden.

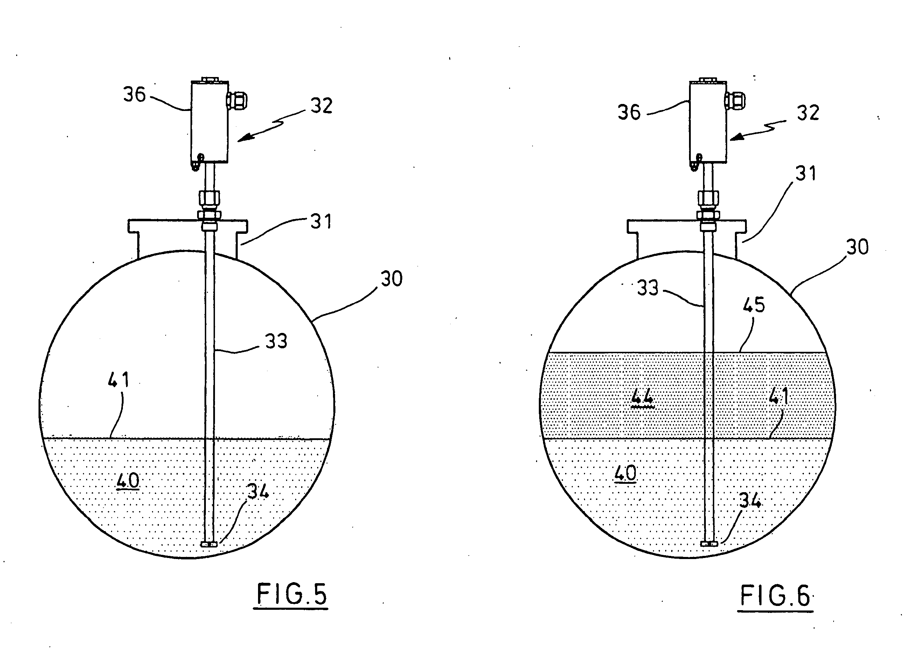

In Figur 5 ist ein Behälter 30 mit einem Dom 31 gezeigt, an dem eine für die Praxis besonders vorteilhafte Ausführungsform einer Vorrichtung 32 zur Bestimmung des Füllstands montiert ist. Bei der Vorrichtung 32 erstreckt sich ein Rohr 33 nach unten in den Behälter 30 bis fast zur Sohle des Behälters 30. Das Rohr 33 ist aus Metall und als Gegenelektrode geschaltet. Im Inneren des Rohrs 33 und entlang von dessen Achse ist eine zylindrische Elektrode montiert, deren erstes Ende bei 34 liegt. Um den Zutritt von Flüssigkeit in den ringförmigen Raum zwischen der Elektrode und dem Rohr 33 zu ermöglichen, ist die Wandung des Rohrs 33 mit Öffnungen versehen.

Im Außenbereich ist eine Betriebselektronik 36 mit dem Rohr 33 verbunden, die alle elektronischen Einrichtungen zur Steuerung und Auswertung enthält.

In Figur 5 ist die leitende Flüssigkeit mit 40 bezeichnet, der Füllstand ist bei 41 angezeigt.

Sehr ähnlich wie Figur 5 ist die Anordnung gemäß Figur 6, weshalb in Figur 6 dieselben Bezugszeichen verwendet sind wie in Figur 5. Zusätzlich zu der leitenden Flüssigkeit 40 enthält der Behälter 30 eine nicht leitende Flüssigkeit 44, die spezifisch leichter ist als die leitende Flüssigkeit 40 und sich damit nicht mischt, so dass eine eigenständige Schicht mit einem oberen Pegel 45 ausgebildet ist. Wenn beispielsweise Kohlenwasserstoffe und Wasser in einem Tank vorhanden sind, bildet sich eine derartige Schichtenfolge aus. Da die Vorrichtung 32 auf die nicht leitende Flüssigkeit 44 nicht reagiert, verläuft eine Messung des Füllstands 41 der leitenden Flüssigkeit 40 genauso ab, wie zuvor beschrieben. Das Ergebnis dieser Bestimmung ist die Lage der Trennschicht zwischen der leitenden Flüssigkeit 40 und der nicht leitenden Flüssigkeit 44.

Bei der Ausführungsform gemäß Figur 7 ist eine Vorrichtung zur Bestimmung des Füllstands einer elektrisch leitenden Flüssigkeit von unten in einen Behälter 50 eingebaut, an dessen Unterseite ein Stutzen 51 befestigt ist. Die Vorrichtung 52 weist ein Rohr 53 auf, das als Gegenelektrode geschaltet ist und in seinem Innenraum eine Elektrode enthält, ähnlich wie das Rohr 33 der Vorrichtung 32. Die Anordnung der Flüssigkeiten ist wie bei der Ausführungsform gemäß Figur 6.

Das erste Ende der Elektrode taucht auch bei niedrigem Füllstand in die Flüssigkeit ein, befindet sich also in der Anordnung gemäß Figur 7 unten (bei 54) und damit in der Nähe der Betriebselektronik 56 und nicht am freien Ende (bei 55) der Elektrode wie bei den zuvor erläuterten Ausführungsformen. Wenn die Vorrichtung 52 schaltungstechnisch so aufgebaut ist wie die Vorrichtung 1, zeigt jetzt bei variierendem Füllstand der zweite Spannungsmesser 28 einen Spannungsverlauf an wie zuvor der erste Spannungsmesser 22, d.h. dort liegt eine Spannung an, die zwischen 0 und dem halben Wert der längs der gesamten Elektrode 6 abfallenden Spannung variiert.

Falls man nicht weiß, ob die Elektrode 6 von unten oder von oben in einen Behälter eingebaut ist (was in der Praxis durchaus vorkommen kann), kann man also durch einen Vergleich der an den Spannungsmessern 22 und 28 anliegenden Spannungen die Einbauorientierung ermitteln. Wie aus Figur 3 ersichtlich, sind diese Spannungen komplementär zueinander.

In Figur 8 ist eine Anordnung veranschaulicht, in der ein Behälter 60 mit einem Dom 61 in seinem oberen Bereich einen Überlauf 62 besitzt. In dem Behälter 60 befindet sich eine nicht leitende Flüssigkeit 64 unterhalb einer Schicht mit einer leitenden Flüssigkeit 66. Die Grenzschicht ist mit 65 bezeichnet und der obere Pegel mit 67.

Der Überlauf 62 sorgt dafür, dass sich der Pegel 67 immer in derselben Höhe befindet. Dagegen kann die Höhe der Grenzschicht 65, also die Dicke der Schicht mit der leitenden Flüssigkeit 66, variieren. In Bezug auf die leitende Flüssigkeit 66 entspricht also die Anordnung gemäß Figur 8 der Anordnung gemäß Figur 7. Das von der Funktion her erste Ende 68 der Elektrode liegt in Höhe des Pegels 67, ist also nicht das freie Ende eines Rohrs und liegt auch nicht genau am Ende eines Rohrs. Das von der Funktion her zweite Ende der Elektrode befindet sich bei 69.

Wenn sich in der Anordnung gemäß Figur 8 die elektrisch leitende Flüssigkeit unten befindet, ergeben sich wieder die Verhältnisse wie in den Anordnungen gemäß Figur 1 und Figur 6. In diesem Fall liegt also das erste Ende der Elektrode bei 69. Durch einen Vergleich der Spannungsverläufe am ersten Spannungsmesser 22 und am zweiten Spannungsmesser 28 bei variierender Lage der Grenzschicht 65 lässt sich demnach feststellen, ob sich die leitende Flüssigkeit oben oder unten befindet.

Um bei der Anordnung gemäß Figur 8 die mittels des ersten bzw. zweiten Spannungsmessers bestimmten Spannungswerte richtig zuordnen zu können, muss die Orientierung der Vorrichtung 32 bekannt sein.

## Patentansprüche

1. Verfahren zum Bestimmen des Füllstands einer elektrisch leitenden Flüssigkeit in einem Behälter (2; 30; 50; 60) mit den Schritten:
- Eintauchen einer Elektrode (6), die einen elektrischen Widerstand bildet und ein erstes Ende (14; 34; 54; 68) und ein zweites Ende (15; 55; 69) aufweist, in die Flüssigkeit (4; 40; 66), wobei zu dem ersten Ende der Elektrode (6) eine Zuleitung (16) mit niedrigem elektrischen Widerstand führt und wobei die Eintauchlänge in die Flüssigkeit (4; 40; 66) mit dem Füllstand (5; 41; 65) variiert und das erste Ende (14; 34; 54; 68) auch bei niedrigem Füllstand (5; 41; 65) in die Flüssigkeit (4; 40; 66) eintaucht,
- Durchleiten eines zeitlich veränderlichen Stroms durch die Elektrode (6),
- Bestimmen einer für die Potentialdifferenz zwischen dem ersten Ende (14; 34; 54; 68) der Elektrode (6) und einer mit der Flüssigkeit (4; 40; 66) elektrisch leitend in Verbindung stehenden Gegenelektrode (8; 33; 53) charakteristischen ersten Spannung,
- Zuordnen eines Füllstandwerts zu dieser ersten Spannung, **dadurch gekennzeichnet,**
- **dass** der Strom pulsartig angelegt wird und
- **dass** zum Zuordnen des Füllstandwerts der zeitliche Verlauf der ersten Spannung ausgewertet wird,
- wobei der zeitliche Verlauf der ersten Spannung aufgezeichnet und in den Pausen zwischen aufeinander folgenden Strompulsen ausgewertet wird.

2. Verfahren nach Anspruch 1, **dadurch gekennzeichnet, dass** für die Quelle (20) des zeitlich veränderlichen Stroms eine 4-20mA-Schnittstelle verwendet wird.

3. Verfahren nach Anspruch 1 oder 2, **dadurch gekennzeichnet, dass** eine zweite Spannung bestimmt wird, die für die Potentialdifferenz zwischen dem zweiten Ende (15; 55; 69) der Elektrode (6) und der Gegenelektrode (8; 33; 53) charakteristisch ist.

4. Verfahren nach Anspruch 3, **dadurch gekennzeichnet, dass** aus dem Vergleich der ersten Spannung mit der zweiten Spannung die Einbaulage der Elektrode (6) bestimmt wird, insbesondere, ob die Elektrode (6) von oben oder von unten in die Flüssigkeit (4; 40; 66) eingeführt ist.

5. Verfahren nach einem der Ansprüche 1 bis 3, wobei zusätzlich zu der elektrisch leitenden Flüssigkeit (40; 66) eine Schicht mit einer elektrisch nicht leitenden Flüssigkeit (44; 64), deren elektrische Leitfähigkeit höchstens 1/100 der elektrischen Leitfähigkeit der elektrisch leitenden Schicht (40; 66) beträgt, in dem Behälter (30; 50; 60) vorhanden ist und die Einbaulage der Elektrode bekannt ist, **dadurch gekennzeichnet, dass** der Füllstand (41; 65) der elektrisch leitenden Schicht (40; 66) bestimmt wird.

6. Verfahren nach Anspruch 3 und nach Anspruch 5, **dadurch gekennzeichnet, dass** aus dem Vergleich der ersten Spannung mit der zweiten Spannung bestimmt wird, ob sich die elektrisch leitende Flüssigkeit (40; 66) oberhalb oder unterhalb der elektrisch nicht leitenden Flüssigkeit (44; 64) befindet.

7. Verfahren nach einem der Ansprüche 1 bis 6, **dadurch gekennzeichnet, dass** für den elektrischen Widerstand zwischen der Elektrode (6) und der Gegenelektrode (8) charakteristische Größen gemessen werden und dass daraus und mittels der von dem Füllstand (5) der elektrisch leitenden Flüssigkeit (4) abhängenden Geometrie der Feldverteilung zwischen Elektrode (6) und Gegenelektrode (8) die elektrische Leitfähigkeit der Flüssigkeit (4) bestimmt wird.

8. Verfahren nach einem der Ansprüche 1 bis 7, **dadurch gekennzeichnet, dass** die Behälterwandung als' Gegenelektrode ausgebildet ist.

9. Verfahren nach einem der Ansprüche 1 bis 7, **dadurch gekennzeichnet, dass** die Gegenelektrode (8; 33; 53) auf eine der folgenden Arten ausgebildet ist: stabförmig, stabförmig und parallel zu der Elektrode (6) angeordnet, rohrförmig und konzentrisch zu der Elektrode angeordnet, als flaches Blech, als Drahtseil mit einem Gewicht im unteren Bereich, bei einer Behälterwandung aus Kunststoff als nach unten geführtes Blech an der Innenseite der Behälterwandung.

10. Vorrichtung zur Bestimmung des Füllstands einer elektrisch leitenden Flüssigkeit in einem Behälter (2; 30; 50; 60), insbesondere nach einem Verfahren nach einem der Ansprüche 1 bis 9,
- mit einer Elektrode (6), die einen elektrischen Widerstand bildet, die ein erstes (14; 34; 54; 68) und ein zweites Ende (15; 55; 69) aufweist und deren Eintauchlänge in die Flüssigkeit (4; 40; 66) mit dem Füllstand (5; 41; 65) variiert, wobei zu dem ersten Ende der Elektrode (6) eine Zuleitung (16) mit niedrigem elektrischen Widerstand führt und wobei das erste Ende (14; 34; 54; 68) auch bei niedrigem Füllstand (5; 41; 65) in die Flüssigkeit (4; 40; 66) eintaucht,
- mit einer Stromquelle (20), die zum Durchleiten eines zeitlich veränderlichen Stroms durch die Elektrode (6) eingerichtet ist,
- mit einer Einrichtung (22), die zum Bestimmen einer für die Potentialdifferenz zwischen dem ersten Ende (14; 34; 54; 68) der Elektrode (6) und einer mit der Flüssigkeit (4; 40; 66) elektrisch leitend in Verbindung stehenden Gegenelektrode (8; 33; 53) charakteristischen ersten Spannung eingerichtet ist,
- mit einer Auswerteeinrichtung, die zum Zuordnen eines Füllstandwerts zu dieser ersten Spannung eingerichtet ist, **dadurch gekennzeichnet,**
- **dass** die Stromquelle (20) dazu eingerichtet ist, den Strom pulsartig anzulegen, und
- **dass** die Auswerteeinrichtung dazu eingerichtet ist, zum Zuordnen des Füllstandwerts den zeitliche Verlauf der ersten Spannung auszuwerten,
- wobei die Auswerteeinrichtung dazu eingerichtet ist, den zeitlichen Verlauf der ersten Spannung aufzuzeichnen und in den Pausen zwischen aufeinander folgenden Strompulsen auszuwerten.

11. Vorrichtung nach Anspruch 10, **dadurch gekennzeichnet, dass** die Stromquelle (20) eine 4-20mA-Schnittstelle aufweist.

12. Vorrichtung nach Anspruch 10 oder 11, **gekennzeichnet durch** eine Einrichtung (28), die dazu eingerichtet ist, eine zweite Spannung zu bestimmen, die für die Potentialdifferenz zwischen dem zweiten Ende (15; 55; 69) der Elektrode (6) und der Gegenelektrode (8; 33; 53) charakteristisch ist.

13. Vorrichtung nach Anspruch 12, **dadurch gekennzeichnet, dass** die Auswerteeinrichtung dazu eingerichtet ist, aus dem Vergleich der ersten Spannung mit der zweiten Spannung die Einbaulage der Elektrode (6) zu bestimmen, insbesondere, ob die Elektrode (6) von oben oder von unten in die Flüssigkeit (4; 40; 66) eingeführt ist.

14. Vorrichtung nach einem der Ansprüche 10 bis 12, wobei zusätzlich zu der elektrisch leitenden Flüssigkeit (40; 66) eine Schicht mit einer elektrisch nicht leitenden Flüssigkeit (44; 64), deren elektrische Leitfähigkeit höchstens 1/100 der elektrischen Leitfähigkeit der elektrisch leitenden Schicht (40; 66) beträgt, in dem Behälter (30; 50; 60) vorhanden ist und die Einbaulage der Elektrode bekannt ist, **dadurch gekennzeichnet, dass** die Vorrichtung dazu eingerichtet ist, den Füllstand (41; 65) der elektrisch leitenden Schicht (40; 66) zu bestimmen.

15. Vorrichtung nach Anspruch 12 und nach Anspruch 14, **dadurch gekennzeichnet, dass** die Auswerteeinrichtung dazu eingerichtet ist, aus dem Vergleich der ersten Spannung mit der zweiten Spannung zu bestimmen, ob sich die elektrisch leitende Flüssigkeit (40; 66) oberhalb oder unterhalb der elektrisch nicht leitenden Flüssigkeit (44; 64) befindet.

16. Vorrichtung nach einem der Ansprüche 10 bis 15, **dadurch gekennzeichnet, dass** die Auswerteeinrichtung dazu eingerichtet ist, aus für den elektrischen Widerstand zwischen der Elektrode (6) und der Gegenelektrode (8) charakteristischen Messgrößen und mittels der von dem Füllstand (5) der elektrisch leitenden Flüssigkeit (4) abhängenden Geometrie der Feldverteilung zwischen Elektrode (6) und Gegenelektrode (8) die elektrische Leitfähigkeit der Flüssigkeit (4) zu bestimmen.

17. Vorrichtung nach einem der Ansprüche 10 bis 16, **dadurch gekennzeichnet, dass** die Behälterwandung als Gegenelektrode ausgebildet ist.

18. Vorrichtung nach einem der Ansprüche 10 bis 16, **dadurch gekennzeichnet, dass** die Gegenelektrode (8; 33; 53) auf eine der folgenden Arten ausgebildet ist: stabförmig, stabförmig und parallel zu der Elektrode (6) angeordnet, rohrförmig und konzentrisch zu der Elektrode angeordnet, als flaches Blech, als Drahtseil mit einem Gewicht im unteren Bereich, bei einer Behälterwandung aus Kunststoff als nach unten geführtes Blech an der Innenseite der Behälterwandung.

19. Vorrichtung nach einem der Ansprüche 10 bis 18, **dadurch gekennzeichnet, dass** die Elektrode (6) auf eine vorgegebene Länge einrichtbar ist.

## Claims

1. Method for determining the filling level of an electrically conducting liquid in a container (2; 30; 50; 60) comprising the steps:
- immersing an electrode (6), which forms an electrical resistance and has a first end (14; 34; 54; 68) and a second end (15; 55; 69), into the liquid (4; 40; 66), wherein a feed line (16) with low electrical resistance leads to the first end of the electrode (6) and wherein the length of the immersion in the liquid (4; 40; 66) varies with the filling level (5; 41; 65) and the first end (14; 34; 54; 68) also dips into the liquid (4; 40; 66) even with a low filling level (5; 41; 65),
- passing a time-variable current through the electrode (6),
- determining a first voltage characteristic of the difference in potential between the first end (14; 34; 54; 68) of the electrode (6) and a counter electrode (8; 33; 53) in connection in an electrically conducting manner with the liquid (4; 40; 66),
- allocating a filling level value to said first voltage,
**characterised in that**
- the current is pulse-like and **in that**
- to allocate the filling level value the chronological sequence of the first voltage is evaluated,
- wherein the chronological sequence of the first voltage is recorded and evaluated in the intervals between consecutive current pulses.

2. Method according to claim 1, **characterised in that** for the source (20) of the chronologically variable current a 4-20mA interface is used.

3. Method according to claim 1 or 2, **characterised in that** a second voltage is determined, which is characteristic of the difference in potential between the second end (15; 55; 69) of the electrode (6) and the counter electrode (8; 33; 53).

4. Method according to claim 3, **characterised in that** from the comparison of the first voltage with the second voltage the installation position of the electrode (6) is determined, in particular whether the electrode (6) has been introduced from above or from below into the liquid (4; 40; 66).

5. Method according to one of claims 1 to 3, wherein in addition to the electrically conducting liquid (40; 66) a layer is provided with an non-electrically conducting liquid (44; 64), the electrical conductivity of which is at the most 1/100 of the electrical conductivity of the electrically conducting layer (40; 66), in the container (30; 50; 60), and the installation position of the electrode is known, **characterised in that** the filling level (41; 65) of the electrically conducting layer (40; 66) is determined.

6. Method according to claim 3 and claim 5, **characterised in that** from the comparison of the first voltage with the second voltage it is determined whether the electrically conducting liquid (40; 66) is located above or below the non-electrically conducting liquid (44; 64).

7. Method according to one of claims 1 to 6, **characterised in that** characteristic variables are measured for the electrical resistance between the electrode (6) and the counter electrode (8), and **in that** from this and by means of the geometry of the field distribution dependent on the filling level (5) of the electrically conducting liquid (4) between the electrode (6) and counter electrode (8) the electrical conductivity of the liquid (4) is determined.

8. Method according to one of claims 1 to 7, **characterised in that** the container wall is designed as a counter electrode.

9. Method according to one of claims 1 to 7, **characterised in that** the counter electrode (8; 33; 53) is designed in one of the following manners; rod-like, arranged rod-like and parallel to the electrode (6), tubular and arranged to be concentric to the electrode, as a flat metal sheet, as a wire cable with a weight in the lower section, with a container wall made of plastic as a downwards guided metal sheet on the inside of the container wall.

10. Device for determining the filling level of an electrical conducting liquid in a container (2; 30; 50; 60), in particular according to a method according to one of claims 1 to 9 comprising,
- an electrode (6) which forms an electrical resistance, which has a first (14; 34; 54; 68) and a second end (15; 55; 69) and the length of the immersion into the liquid (4; 40; 66) varies with the filling level (5; 41; 65), wherein a feed line (16) with low electrical resistance leads to the first end of the electrode (6) and wherein the first end (14; 34; 54; 68) also dips into the liquid (4; 40; 66) even with a low filling level (5; 41; 65),
- a current source (20) which is set up for passing a chronologically variable current through the electrode (6),
- a device (22) which is set up for determining a first voltage characteristic of the potential difference between the first end (14; 34; 54; 68) of the electrode (6) and a counter electrode (8; 33; 53) in electrically conducting connection with the liquid (4; 40; 66),
- an evaluation device which is set up for allocating a filling level value to said first voltage,
**characterised in that**
- the current source (20) is set up to supply the current in a pulse-like manner
- and **in that** the evaluation device is set up for allocating the filling level value to evaluate the chronological sequence of the first voltage,
- wherein the evaluation device is set up to record the chronological sequence of the first voltage and evaluate in the intervals between consecutive current pulses.

11. Device according to claim 10, **characterised in that** the current source (20) comprises a 4-20mA interface.

12. Device according to claim 10 or 11, **characterised by** a device (28) which is set up to determine a second voltage which is characteristic of the potential difference between the second end (15; 55; 69) of the electrode (6) and the counter electrode (8; 33; 53).

13. Device according to claim 12, **characterised in that** the evaluation device is set up for determining from the comparison of the first voltage with the second voltage the installation position of the electrode (6), in particular whether the electrode (6) has been inserted from above or from below into the liquid (4; 40; 66).

14. Device according to one of claims 10 to 12, wherein in addition to the electrically conducting liquid (40; 66) a layer is provided with a non-electrically conducting liquid (44; 64), the electrical conductivity of which is at most 1/100 of the electrical conductivity of the electrically conducting layer (40; 66) in the container (30; 50; 60) and the installation position of the electrode is known, **characterised in that** the device is also set up to determine the filling level (41; 65) of the electrically conducting layer (40; 66).

15. Device according to claim 12 and according to claim 14, **characterised in that** the evaluation device is set up to determine from the comparison of the first voltage and the second voltage, whether the electrically conducting liquid (40; 66) is located above or below the non-electrically conducting liquid (44; 64).

16. Device according to one of claims 10 to 15, **characterised in that** the evaluation device is set up for determining from measurement variables characteristic of the electrical resistance between the electrode (6) and the counter electrode (8) and by means of the geometry of the field distribution dependent on the filling level (5) of the electrically conducting liquid (4) between the electrode (6) and counter electrode (8) the electrical conductivity of the liquid (4).

17. Device according to one of claims 10 to 16, **characterised in that** the container wall is designed as a counter electrode.

18. Device according to one of claims 10 to 16, **characterised in that** the counter electrode (8; 33; 53) is designed in one of the following manners; rod-like, arranged rod-like and parallel to the electrode (6), tubular and arranged concentrically to the electrode, as a flat metal sheet, as a wire cable with a weight in the lower section, with a container wall made of plastic as a downwards guided metal sheet on the inside of the container wall.

19. Device according to one of claims 10 to 18, **characterised in that** the electrode (6) can be set up with a predefinable length.

## Revendications

1. Procédé de détermination de l'état de remplissage d'un liquide électriquement conducteur dans un contenant (2; 30; 50; 60), avec les étapes:
- immersion d'une électrode (6), qui forme une résistance électrique et présente une première extrémité (14; 34; 54; 68) et une seconde extrémité (15; 55; 69), dans le liquide (4; 40; 66), où mène à la première extrémité de l'électrode (6) une amenée (16) d'une résistance électrique basse, et où la longueur d'immersion dans le liquide (4; 40; 66) varie en fonction de l'état de remplissage (5; 41; 65), et la première extrémité (14; 34; 54; 68), également dans le cas d'un état de remplissage bas (5; 41; 65), plonge dans le liquide (4; 40; 66),
- passage d'un courant modifiable dans le temps par l'électrode (6),
- détermination d'une première tension caractéristique pour la différence du potentiel entre la première extrémité (14; 34; 54; 68) de l'électrode (6) et une contre-électrode (8; 33; 53) en liaison électriquement conductrice avec le liquide (4; 40; 66),
- attribution d'une valeur d'état de remplissage à cette première tension, **caractérisé**
- **en ce que** le courant est appliqué de manière pulsée et
- **en ce que** pour l'attribution de la valeur de l'état de remplissage, le tracé dans le temps de la première tension est évalué,
- où le tracé dans le temps de la première tension est enregistré et est évalué dans les pauses entre les impulsions de courant successives.

2. Procédé selon la revendication 1, **caractérisé en ce qu'**une interface 4-20mA est utilisée pour la source (20) du courant modifiable dans le temps.

3. Procédé selon la revendication 1 ou 2, **caractérisé en ce qu'**une deuxième tension est déterminée qui est caractéristique pour la différence du potentiel entre la seconde extrémité (15; 55; 69) de l'électrode (6) et de la contre-électrode (8; 33; 53).

4. Procédé selon la revendication 3, **caractérisé en ce qu'**à partir de la comparaison de la première tension avec la deuxième tension, la position de montage de l'électrode (6) est déterminée, en particulier, si l'électrode (6) a été introduite depuis au-dessus ou depuis en dessous dans le liquide (4; 40; 66).

5. Procédé selon l'une des revendications 1 à 3, où en plus du liquide (40; 66) électriquement conducteur, une couche avec un liquide électriquement non conducteur (44; 64), dont la conductivité électrique représente au maximum 1/100 de la conductivité électrique de la couche électriquement conductrice (40; 66), est présente dans le contenant (35; 50; 60), et la position de montage de l'électrode est connue, **caractérisé en ce que** l'état de remplissage (41; 65) de la couche électriquement conductrice (40; 66) est déterminé.

6. Procédé selon la revendication 3 et selon la revendication 5, **caractérisé en ce qu'**à partir de la comparaison de la première tension avec la deuxième tension, on détermine si le liquide électriquement conducteur (40; 66) se trouve au-dessus ou en dessous du liquide électriquement non conducteur (44; 64).

7. Procédé selon l'une des revendications 1 à 6, **caractérisé en ce que** pour la résistance électrique entre l'électrode (6) et la contre-électrode (8), des grandeurs caractéristiques sont mesurées, et qu'à partir de celles-ci et au moyen de la géométrie, dépendant de l'état de remplissage (5) du liquide électriquement conducteur (4), de la répartition de champ entre l'électrode (6) et la contre-électrode (8), la conductivité électrique du liquide (4) est déterminée.

8. Procédé selon l'une des revendications 1 à 7, **caractérisé en ce que** la paroi du contenant est réalisée comme contre-électrode.

9. Procédé selon l'une des revendications 1 à 7, **caractérisé en ce que** la contre-électrode (8; 33; 53) est réalisée selon l'une des manières suivantes: en forme de barre, disposé en forme de barre et parallèlement à l'électrode (6), tubulaire et disposé concentriquement à l'électrode, comme tôle plate, comme câble d'acier avec un poids dans la zone inférieure, dans le cas d'une paroi de contenant en matériau synthétique en tant que tôle guidée vers le bas au côté intérieur de la paroi du contenant.

10. Dispositif pour la détermination de l'état de remplissage d'un liquide électriquement conducteur dans un contenant (2; 30; 50; 60), en particulier selon un procédé selon l'une des revendications 1 à 9,
- avec une électrode (6) qui forme une résistance électrique, qui présente une première (14; 34; 54; 68) et une seconde extrémité (15; 55; 69) et dont la longueur d'immersion dans le liquide (4; 40; 66) varie en fonction de l'état de remplissage (5; 41; 65), où mène à la première extrémité de l'électrode (6) une amenée (16) d'une résistance électrique basse, et où la première extrémité (14; 34; 54; 68), également lorsque l'état de remplissage est bas (5; 41; 65) plonge dans le liquide (4; 40; 66),
- avec une source de courant (20) qui est installée pour le passage d'un courant modifiable dans le temps par l'électrode (6),
- avec une installation (22) qui est agencée pour déterminer une première tension caractéristique pour la détermination d'une différence du potentiel entre la première extrémité (14; 34; 54; 68) de l'électrode (6) et une contre-électrode (8; 33; 53) en liaison électriquement conductrice avec le liquide (4; 40; 66),
- avec une installation d'évaluation qui est agencée pour l'attribution d'une valeur d'état de remplissage à cette première tension,
**caractérisé**
- **en ce que** la source de courant (20) est prévue pour appliquer le courant d'une manière pulsée, et
- **en ce que** l'installation d'évaluation est agencée pour évaluer le tracé dans le temps de la première tension pour l'attribution de la valeur d'état de remplissage,
- où l'installation d'évaluation est agencée pour enregistrer le tracé dans le temps de la première tension et pour l'évaluer dans les pauses entre des impulsions de courant successives.

11. Dispositif selon la revendication 10, **caractérisé en ce que** la source de courant (20) présente une interface 4-20mA.

12. Dispositif selon la revendication 10 ou 11, **caractérisé par** une installation (28) qui est agencée pour déterminer une deuxième tension qui est caractéristique pour la différence du potentiel entre la seconde extrémité (15; 55; 69) de l'électrode (6) et de la contre-électrode (8; 33; 53).

13. Dispositif selon la revendication 12, **caractérisé en ce que** l'installation d'évaluation est agencée pour déterminer à partir de la comparaison de la première tension avec la seconde tension la position de montage de l'électrode (6), en particulier si l'électrode (6) a été insérée depuis au-dessus ou depuis en dessous dans le liquide (4; 40; 66).

14. Dispositif selon l'une des revendications 10 à 12, où en plus du liquide électriquement conducteur (40; 66), une couche avec un liquide électriquement non conducteur (44; 64), dont la conductivité électrique représente au maximum 1/100 de la conductivité électrique de la couche électriquement conductrice (40; 66), est présente dans le contenant (30; 50; 60), et la position de montage de l'électrode est connue, **caractérisé en ce que** le dispositif est agencé pour déterminer l'état de remplissage (41; 65) de la couche électriquement conductrice (40; 66).

15. Dispositif selon la revendication 12 et selon la revendication 14, **caractérisé en ce que** l'installation d'évaluation est agencée pour déterminer à partir de la comparaison de la première tension avec la seconde tension si le liquide électriquement conducteur (40; 66) se trouve au-dessus ou en dessous du liquide électriquement non conducteur (44; 64).

16. Dispositif selon l'une des revendications 10 à 15, **caractérisé en ce que** l'installation d'évaluation est agencée pour déterminer, à partir de grandeurs de mesure caractéristiques pour la résistance électrique entre l'électrode (6) et la contre-électrode (8) et au moyen de la géométrie, dépendant de l'état de remplissage (5) du liquide électriquement conducteur (4), de la répartition du champ entre l'électrode (6) et la contre-électrode (8), la conductivité électrique du liquide (4).

17. Dispositif selon l'une des revendications 10 à 16, **caractérisé en ce que** la paroi du contenant est réalisée comme contre-électrode.

18. Dispositif selon l'une des revendications 10 à 16, **caractérisé en ce que** la contre-électrode (8; 33; 53) est réalisée selon l'une des manières suivantes: en forme de barre, disposée en forme de barre et parallèlement à l'électrode (6), en forme de tube et disposée concentriquement à l'électrode, comme tôle plate, comme câble en acier avec un poids dans la zone inférieure, dans le cas d'une paroi de contenant en matériau synthétique comme tôle guidée vers le bas au côté intérieur de la paroi du contenant.

19. Dispositif selon l'une des revendications 10 à 18, **caractérisé en ce que** l'électrode (6) peut être ajustée à une longueur prédéterminée.
